# EUROPEAN PATENT APPLICATION

(11) **EP 4 000 402 A1**
(43) Date of publication of application: **25.05.2022**
(21) Application number: 20206961.3
(22) Date of filing: 11.11.2020
(51) Int. Cl.: A22C 9/00, A22C 17/00, B65G 15/00

(54) **A SYSTEM FOR TREATING FOOD PRODUCTS**

(71) Applicant: Günther Maschinenbau GmbH, 64807 Dieburg (DE)
(72) Inventor: Schwebel, Jörg, 64405 Fischbachtal (DE); Kirchhofer, Jan, 64739 Höchst (DE)
(74) Representative: Eisenführ Speiser

(57) **Abstract**

The present invention relates to a system (S) for treating food products. The system (S) comprises a framework (10), at least one processing module (I) supported by the framework (10), at least one conveyor module (100) which has at least one drivable conveyor element (132) for feeding the food product to be treated to the processing module (I) and discharging the treated food product from the processing module (I) and which is removably mounted on the framework (10), at least one drive unit (60) supported on the framework (10) with a drive motor (62) for driving the at least one conveyor element (132) of the conveyor module (100), and a coupling unit (80) with at least a first and a second coupling sub-assembly (70, 72). The first coupling sub-assembly (70) supported on the framework (10) is rotationally coupled to the drive motor (62), and the second coupling sub-assembly (72) supported on the conveyor module (100) is rotationally coupled to the at least one conveyor element (132) of the conveyor module (100), and the coupling unit (80) is a quick release coupling unit. The present invention further relates to a conveyor module (100) for use in a food processing machine, in particular an injector apparatus for injecting injectate into a food product.

## Description

The present invention relates to a system for treating food products, which comprises, inter alia, a framework, at least one processing module supported by the framework and at least one conveyor module, and a conveyor module for use in a food processing machine.

In practice, machines are known which are used for treating food products or foodstuff, like an injector apparatus for injecting an injectate, like brine, into a food product, like meat. Such machines include a large number of hollow needles attached to an injector head and connected to an injectate. The injector head can be moved reversibly to the food product to be treated in such a way that the needles can penetrate the product in order to deliver the injectate into the product.

A conveyor device that is conventionally designed as a band conveyor or a link conveyor, via which the food products are fed through said injector apparatus, is arranged below said needle head. Such an injector is known from DE 43 12 946 A1.

The known conveyors are fixedly mounted to a framework of said injector apparatus to enable an exact positioning of the food product below the needle head and a precise weighing of the foodstuff prior and after the injection step. However, removing such conveyors from the injector apparatus, like for cleaning, for maintenance or for exchanging the conveyor by a conveyor of different type, is time consuming and thus expensive. Moreover, the cleaning of the injector and the conveyor is cumbersome.

Thus, it is an object of the present invention to provide a system for treating food products having, inter alia, a conveyor module, and a conveyor module for use in a food processing machine, by which the above mentioned drawbacks may be overcome, and which enhances the mounting and demounting procedure of the conveyor module to and from the machine for treating foodstuff.

According to the present invention, there is provided a system for treating food products. The system comprises a framework, at least one processing module supported by the framework, at least one conveyor module which has at least one drivable conveyor element for feeding a food product to be treated to the processing module and discharging the treated food product from the processing module and which is removably mounted on the framework, at least one drive unit supported on the framework with a drive motor for driving the at least one conveyor element of the conveyor module, and a coupling unit with at least a first and a second coupling sub-assembly. In the inventive system, the first coupling sub-assembly supported on the framework is rotationally coupled to the drive motor, and the second coupling sub-assembly supported on the conveyor module is rotationally coupled to the at least one conveyor element of the conveyor module, and the coupling unit is a quick release coupling unit.

The design of the inventive system for treating food products allows a quick removal of the conveyor module from said machine for treating food products, and an easy cleaning of the machine and the conveyor module. In particular, it simplifies the disassembly of the drive unit from the conveyor module, which is extremely complicated with the prior art. The provision of the inventive quick release coupling unit further enables the use of conveyor modules of different kind, like conveyor modules which include a band conveyor, a linked conveyor or other suitable conveyor elements. It is only necessary that such a conveyor module includes the second coupling sub-assembly of the inventive quick release coupling unit. Thereby, in the inventive system for treating food products, different kinds of conveyor module may be used, e.g. in adaption to a specific product to be treated, or a specific treatment process.

In a preferred embodiment of the inventive system for treating food products, the framework has a structure for the supported, detachable, preferably tool-less detachable attachment of the conveyor module to the framework. The structure ensures an easy insertion and removal of the conveyor module into or from the system. The structure of the framework can simultaneously form a guiding function, which allows a guidance of the conveyor module and a precise positioning of the conveyor module.

In a preferred configuration, this can be achieved by the conveyor module having at least one or preferably several support elements on its underside that interact with corresponding counter-elements on the framework. The counter-elements can, for example, be formed by a bottom wall of an injection channel, in which the conveyor module can be inserted. Separate adjustment elements can be provided for adjusting or adapting the position of the conveyor module, which interact with or are formed by the counter-elements of the framework.

Alternatively or additionally, the framework has at least one adjustment and/or attachment sub-assembly for adjusting the position of the conveyor module relative to the processing module and/or for releasably attaching the conveyor module to the framework, preferably without the need for using any tools. Thereby, the conveyor module may correctly be positioned in the system, particularly, with respect to the processing module.

In order to enable a secure connection of the conveyor module to the drive unit, the coupling unit includes a connecting device for releasably coupling the first coupling sub-assembly to the second coupling sub-assembly in a coupled state.

For preventing an unintended connection or disconnection of the conveyor module and the drive unit, the connecting device is tensioned in the coupled state. Alternatively or additionally, the coupling unit may include a securing mechanism for securing the connecting device at least in a release state.

Moreover, a sensor device may be provided in the region of drive unit by means of which the coupled or decoupled state may be detected. Additionally, the sensor device may also be adapted to determine the transportation speed or feed rate of the conveyor module, particularly but not exclusively by detecting motion or counting revolution of an element of the quick release coupling unit. This information may be used for controlling the speed of the conveyor module, or its feed rate.

In an advantageous embodiment of the inventive system, the first coupling sub-assembly includes a first drive shaft adapted to be coupled to a second drive shaft of the second coupling sub-assembly, wherein the drive shafts are preferably hollow shafts and wherein the connecting device is preferably a quick release axle reversibly insertable into said hollow shafts for releasably connecting the first coupling sub-assembly to the second coupling sub-assembly. This design allows a coupling and decoupling of the first and second coupling sub-assemblies from outside the system, whereby the handling of said machine and particularly, the handling of the conveyor module, particularly during insertion or removal to and from the system, is simplified.

In the case that the quick release coupling unit includes a quick release axle, the sensor device may detect the motion or revolution of said quick release axle, on the basis of which the conveyor module may be controlled.

In a preferred design, a transmission unit is provided for transmitting torque from the second coupling sub-assembly to the at least one conveyor element to move the at least one conveyor element on a moving path in the form of a closed loop. A transmission unit may be adapted to transform the rotational movement of the drive unit into a desired movement of a conveyor element on a closed loop.

The moving path of the conveyor element forms a closed loop, and may have any suitable shape, like a circular or elliptical shape. However, said moving path may also include linear portions or circular portions of different diameters.

It is of advantage that the transmission unit includes a first eccentric mechanism comprising at least an eccentric disc having an eccentric pin, and being arranged on said second drive shaft. An eccentric mechanism is a reliable kind of a drive mechanism for realizing the intended conveying movement of the conveyor element.

The transmission unit may further include a pivot lever coupled to the eccentric pin of the eccentric disc, in order to realize a defined movement of the conveyor elements.

The pivot lever may be a two-arm lever with the free end of a first lever arm portion pivotally coupled to the eccentric pin of the eccentric disc, and with the pivot axis pivotally coupled to at least one conveyor element. In this specific configuration, the free end of a second lever arm portion is pivotally coupled to a first end of a pendulum rod, the second end of which is pivotally coupled to a frame element of the system.

Alternatively, it is possible that the pivot lever is a three-arm lever with the free end of a first lever arm portion pivotally coupled to the eccentric pin of the eccentric disc, with the free end of a second lever arm portion pivotally coupled to at least one conveyor element, and with the pivot axis guided in a guide assembly coupled to the a frame element of the conveyor module, on a preferably linear guide path. In case that the pivot lever is a three-arm lever, the free end of a third lever arm portion is pivotally coupled to a coupling rod.

In both designs, with the pivot lever being a two-arm lever or being a three-arm lever, a defined movement of the conveyor elements driven by the drive unit is ensured.

For securely driving the conveyor elements in a defined way, it may be sufficient to provide only one eccentric mechanism. However, for realizing a uniform conveying movement of the conveyor element, a first eccentric mechanism is provided in the region of the second end of the conveyor module, and at least a second eccentric mechanism is provided in the region of the first end of the conveyor module. Additionally, a third eccentric mechanism may be provided in the central region of the conveyor module.

Dependent on the specific design of the conveyor element, it may be sufficient that the conveyor module includes only one conveyor element. However, in order to realize a secure transport of the food products to and from the processing unit, it is of advantage that the conveyor module comprises several, preferably five conveyor elements which can be driven synchronously by the drive unit via the coupling unit.

The conveyor module may have any suitable design. In a preferred embodiment, the conveyor module has a cross-section at least approximately in the form of an upside down letter "U" and wherein the at least one conveyor element is arranged at least partially inside the cavity defined by the letter "U". Thereby, it is ensured that the movement of the conveyor element does not affect other elements or units of the inventive system.

In order to enable a secure transport of the food product to be treated through the inventive system, the conveyor module defines a conveying plane along which the products to be processed and the processed products are conveyed.

In a further preferred embodiment, the conveying plane is defined by a grid unit or grid arrangement formed by intersecting grid strut elements, and the conveyor element being arranged below the conveying plane can extend through a space formed between the grid strut elements during its movement along the closed loop of the moving path.

For an improved transport of the food products along the conveying plane, the conveyor element is provided with at least one gripping tip.

It has to be understood that each conveyor element may have a plurality of gripping tips, which may be arranged in regular intervals on said conveyor element. Furthermore, the gripping tips of the several conveyor elements may be arranged in patterns, like in lines or waves, in order to optimize the transport of the food products along the conveying plane.

For further enabling safe transport of the food products to be treated in the conveying direction, the grid unit or grid arrangement may include a plurality of elongated grid strut elements extending in conveying direction and arranged laterally to each other with spaces between adjacent grid strut elements, and with each one of the several conveyor elements arranged below a respective space between adjacent grid elements, such that at least the gripping tips extend through said spaces between adjacent grid strut elements in one section of the moving path of the conveyor elements.

Further according to the present invention, there is provided a conveyor module for use in a food processing machine, in particular an injector apparatus for injecting injectate into a food product, including a processing module, like an injector, wherein the conveyor module comprises at least one drivable conveyor element for feeding a food product to be processed to the processing module and discharging the processed food product from the processing module and a coupling sub-assembly for releasable coupling the conveyor element with a drive unit of the food processing machine.

The inventive conveyor module provides the same advantages as explained in conjunction with the inventive system for treating food products.

It has to be understood that an injector apparatus is only one example for a food processing machine. The inventive conveyor module may also be used in other food processing machines, in which the food products have to be conveyed, like portioning machines or packaging machines.

Furthermore, an injector apparatus may inject different kinds of injectate, like brine ore a solution including a spice mixture, into different kinds of food products or food products, like meat, fish or poultry.

In the following, further advantages and embodiments of the inventive system und conveyor modules are described in conjunction with the attached drawings. Thereby, the expressions "left", "right", "below" and "above" are referred to the drawings in an orientation of the drawings, which allows the normal reading of the reference numbers.

In the drawings:
- Fig. 1:: is a perspective view to the front side of an injector apparatus, as an example for an inventive system for treating food products, including a conveyor module in an operative position according to the present invention;
- Fig. 2:: is an enlarged perspective partial view to the rear side of the injector apparatus according to Fig. 1;
- Fig. 3:: is a partial cross-sectional view of a drive unit for driving the conveyor module as shown in Figs. 1 and 2, in a vertical plane through a drive shaft of the drive unit;
- Fig. 4:: is a perspective view to a first embodiment of the conveyor module according to the present invention;
- Fig. 5:: is an enlarged perspective partial view of the bottom side of the conveyor module according to Fig. 4;
- Fig. 6:: is a longitudinal cross-sectional view of the conveyor module according to Fig. 4 in a vertical plane through an eccentric mechanism of a transmission unit;
- Fig. 7:: is a perspective view to a second embodiment of a conveyor module according to the present invention;
- Fig. 8:: is an enlarged perspective partial view of the bottom side of the conveyor module according to Fig. 7; and
- Fig. 9:: is a longitudinal cross-sectional view of the conveyor module according to Fig. 7 in a vertical plane through the eccentric mechanism of the transmission unit.

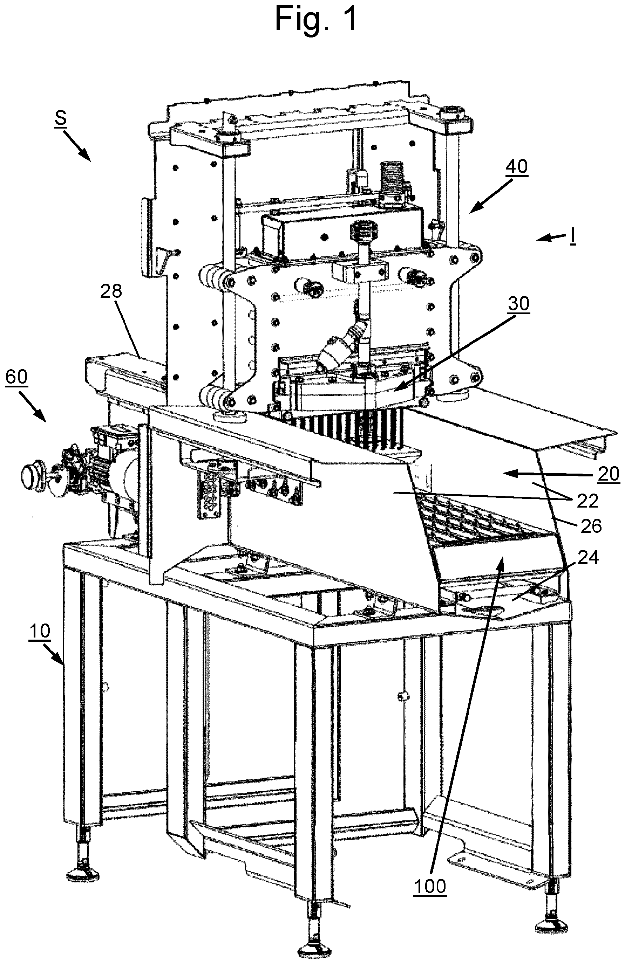

Fig. 1 shows an injector apparatus S, as an example of an inventive system for treating food products with a conveyor module 100 in an operative position according to the present invention.

In Fig. 1, only the basic components of injector apparatus S are shown. These basic components comprise a framework 10, an injection tunnel or injection channel 20 which extends at least substantially horizontally, and an injector head 30 including a plurality of injector needles carried by an injector head support 40 and guided by a needle guide. Injector head 30 and injector head support 40 form a processing unit I.

A conveyor module 100 which also extends or is aligned essentially horizontally, is removably positioned in injection channel 20 below injector head 30, but extends horizontally left and right beyond injector head 30. Injector head 30 together with the associated injector needles is reversibly movable at least approximately perpendicular to the longitudinal extension of conveyor module 100, i.e. at least substantially vertically, in order to penetrate a food product to be provided with the injectate, like e.g. brine, with the needles and to discharge the injectate into the food product.

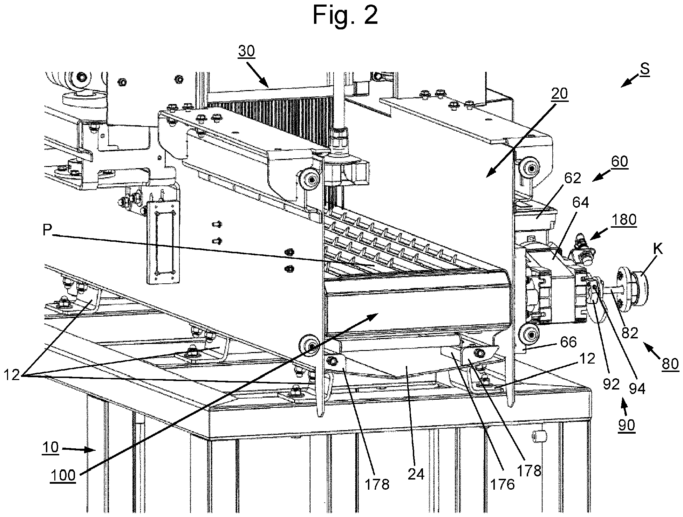

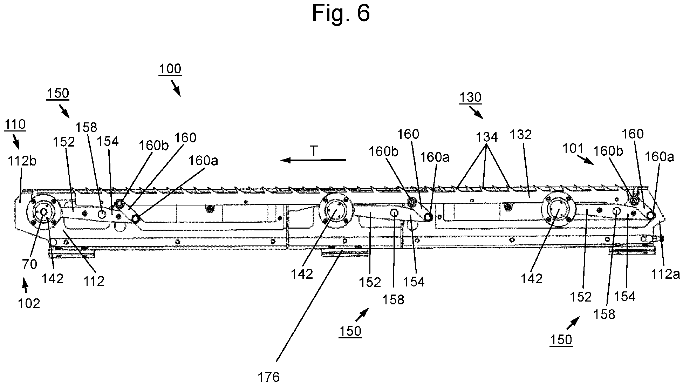

Injection channel 20 has two side walls 22 arranged parallel to each other and extending at least substantially vertically, and a bottom 24 connecting both side walls 22 and extending approximately horizontally and between the lower edges of side walls 22. Injection channel 20 further has an infeed end 26 facing towards the front side of injector apparatus S and shown in Fig. 1, as well as a discharge end 28 arranged opposite to infeed end 26, facing towards the rear side of injector apparatus S and shown in Fig. 2. A food product to be treated is conveyed through injection channel 20 by means of conveyor module 100 in a conveying direction T (cf. Fig. 6), from front or first end 101 of conveyor module 100, which at least approximately coincides with infeed end 26 of injection channel 20, to rear or second end 102 of conveyor module 100, which at least approximately coincides with discharge end 28 of injection channel 20. Conveyor module 100 is driven by a drive unit 60 arranged in the region of second end 102 of conveyor module 100, as shown in Fig. 2.

It has to be noted that other components, like an injectate reservoir, injectate delivery pipes, respective pumps and/or a control unit for controlling injector apparatus S, are additionally provided, but have been omitted in Fig. 1 for clarity reasons.

As it can particularly be seen in Fig. 2, bottom 24 of injection channel 20 is supported by brackets 12 on framework 10. Bottom 24 does not exactly extend horizontally, but slightly inclined from infeed end 26 to discharge end 28 and has a cross-section in the shape of a flattened letter "V". This facilitates the discharge of excess injectate from injector apparatus S into a collecting container located at discharge end 28.

Drive unit 60 includes an electric motor 62 coupled to a gear box 64. Gearbox 64 is mounted to injector apparatus S by a flange 66 to the outside of injection channel 20 in the region of its discharge end 28.

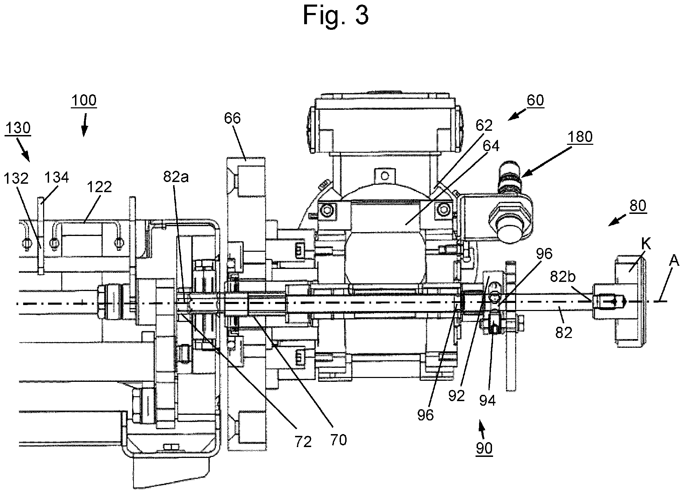

As can be seen in Fig. 3, a coupling unit 80 is provided, which comprises a first drive shaft 70 and a second drive shaft 72, both extending at least substantially horizontally. First drive shaft 70, which forms a first coupling sub-assembly, exits gearbox 64 in a direction towards conveyor module 100 and is thus supported by frame unit 110. Second drive shaft 72 that forms a second coupling sub-assembly, is rotatable supported by conveyor module 100 and is arranged horizontally and rectangular to conveying direction T. Moreover, second drive shaft 72 is coaxially aligned with first drive shaft 70, with respect to a common central axis A.

Coupling unit 80 is provided for releasably connecting first drive shaft 70 to second drive shaft 72. First and second drive shafts 70, 72 are formed as hollow shafts, each having a through hole extending coaxially to central axis A through said shafts 70, 72. Coupling unit 80 further includes a connecting device in the form of a quick release axle 82 which comprises a first end 82a and a second end 82b and which can releasable be inserted into the through holes in first and second drive shafts 70, 72 with first end 82a along central axis A. The cross-sectional profile of the connecting device or quick release axle 82 corresponds to the cross-sectional profile of the through holes in first and second drive shafts 70, 72. For allowing the transmission of torque from first drive shaft 70 to second drive shaft 72, quick release axle 82 has to form-fit or force-fit engage with first and second drive shafts 70, 72. In the present embodiment, quick release axle 82 has at least in the region of its first end 82a a hexagonal cross-sectional profile, i.e. in the region where axis 82 extends in both the first and second drive shaft 70, 72 and the through holes in first and second drive shafts 70, 72 have a corresponding hexagonal cross-sectional profile, for a form-fit engagement with first end 82a of quick release axle 82. Of course, other designs of torque transmission from first drive shaft 70 to second drive shaft 72, such as tongue and groove solutions, can also be provided.

At second end 82b of quick release axle 82, a handle or knob K is fixedly arranged, for inserting or removing quick release axle 82, and particularly for positioning quick release axle 82 in a connecting or coupling position, in which at least a region at first end 82a of axle 82 is in engagement with first and second drive shafts 70, 72, or a coupled state as shown in Fig. 3, or in a release position or a decoupled state, in which said region of first end 82a is out of engagement, at least with second drive shaft 72.

Coupling unit 80 further comprises a securing mechanism 90 for securing quick release axle 82 in the connecting position or in the release position. Securing mechanism 90 includes a support element 92 arranged in the region of second end 82b of quick release axle 82. Support element 92 is fixed to a portion of the housing (not shown) of injector apparatus S. Moreover, support element 92 is provided with a through hole through which quick release axle 82 extends, and further comprises setscrews 94 that can reversibly screwed into support element 92 in a direction radially to said through hole, i.e. perpendicular to central axis A. Quick release axle 82 is further provided with two circumferentially extending grooves 96, which are positioned such that setscrews 94 may engage one of grooves 96 when quick releases axle 82 is in the connecting position, and that setscrews 94 may engage the respective other groove 96 when quick release axle 82 is in the release position. Grooves 96 are arranged axially offset to each other. In addition, an elastic component, like a spring, not shown in detail may be provided to force axle 82 into the connecting or coupling position. In this case, one of the two grooves 96, especially the groove in which setscrews 94 sit in when axle 82 is in the connecting position, may no longer be present.

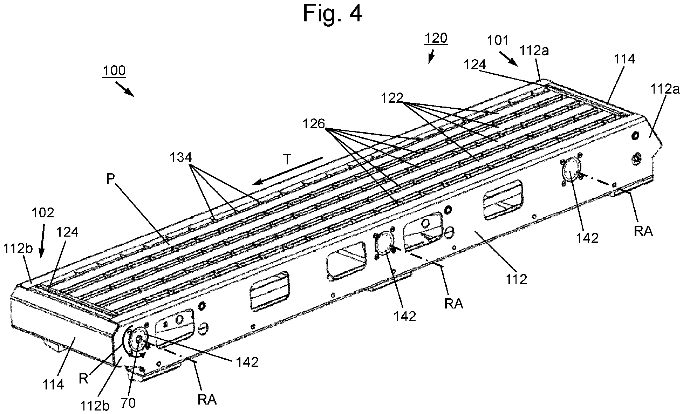

As can be seen from Figs. 4 to 6, conveyor module 100 has a frame unit 110, that consists of a first pair of frame elements 112 which have first ends 112a and second ends 112b and extend in conveying direction T, and a second pair of the frame elements 114, one of which extends between each of first second ends 112a, 112b of frame elements 112, and which are arranged at right angles to frame elements 112, i.e. rectangular to conveying direction T. First and second pairs of frame elements 112, 114 thereby form a rectangular base frame.

A grid arrangement 120 is positioned between the upper edges of frame elements 112, 114, and in a common plane extending at least substantially horizontally and forming a conveying plane P of conveyor module 100. Grid arrangement 120 includes a plurality of elongated grid strut elements 122, which extend between frame elements 114 in conveying direction T, parallel to each other and with a space or gap 126 between adjacent grid strut elements 122 (cf. Fig. 4). In the embodiment shown in Fig. 4, conveyor module 100 has five spaces 126. Of course, more or less spaces 126 can be provided.

Grid arrangement 120 further includes two crosspieces 124, which are arranged at the ends of grid strut elements 122 parallel to frame elements 114, and which connect the respective ends of grid strut elements 122. Grid strut elements 122 may have a generally rectangular cross-section, with one side arranged in conveying plane P. In the present embodiments of conveyor module 100 shown in Figs. 4 to 6 and 7 to 9, grid strut elements 122 have a U-shaped cross-section, with the open side of the U-shape facing downwards, and with the flat bottom of the U-shape forming conveying plane P (cf. Fig. 3).

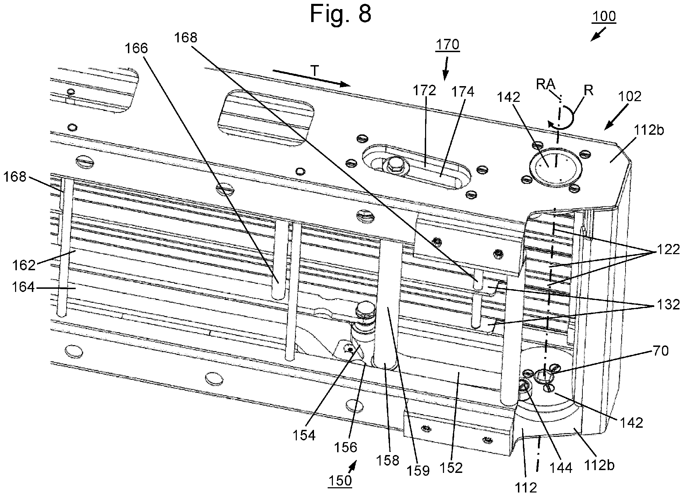

Together with grid arrangement 120, frame elements 112, 114 have a cross-sectional profile of an upside down letter "U", so that between frame elements 112, 114 and grid arrangement 120 there is a downwardly open cavity. For conveying food products to be treated by injector apparatus S on conveying plane P in conveying direction T, a conveyor unit 130 is provided, that includes a plurality of elongated conveyor elements 132 that is at least partially arranged in the cavity of frame unit 110. Conveyor elements 132 which are driven by drive unit 60 as explained below, are bar-shaped and extend in conveying direction T. Conveyor elements 132 are arranged below grid arrangement 120 with one conveyor element 132 positioned below each space 126 between grid strut elements 122. At the upper edge of conveyor elements 132, upwardly extending gripping tips in the form of spikes 134 are arranged in at least substantially regular intervals (cf. Figs. 4, 8). Furthermore, gripping tips or spikes 134 of neighboring conveyor elements 132 may be arranged in patterns, like in straight or wave lines.

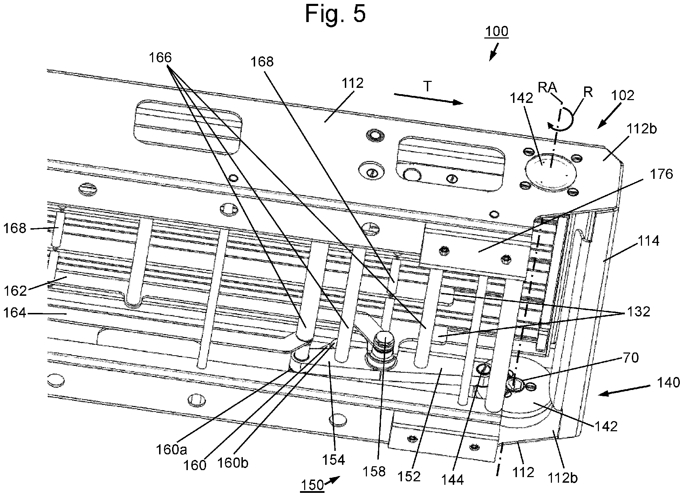

For transforming the rotational movement of first and second drive shafts 70, 72 into a translational movement of conveyor elements 132, at each frame element 112, eccentric mechanisms 140 as a part of a transmission unit 140, 150, 160, are provided (cf. Fig. 5). Each eccentric mechanism 140 includes an eccentric disc 142 that is rotatable supported by frame element 112, about a horizontal rotation axis RA that is perpendicularly arranged to conveying direction T, with eccentric disc 142 having an eccentric pin 144 (cf. Figs. 4 to 9). Eccentric pin 144 is rotatable connected to a pivot lever 150 (cf. Figs. 5, 8).

As particularly can be seen in Figs. 5 and 8, eccentric disc 142 at second end 112b of left frame element 112 (the lower frame element 112 in Figs. 5 and 8) is fixedly mounted on second coupling sub-assembly or second drive shaft 72 of coupling unit 80, and is thus driven by electric motor 62 via first coupling sub-assembly or first drive shaft 70 of coupling unit 80, when quick release axle 82 is in the connecting or coupling position.

In the first embodiment of conveyor module 100 according to Figs. 4 to 6, pivot lever 150 is an approximately straight two-arm lever, with a first lever arm portion 152, a second lever arm portion 154 and a pivot point 158 arranged between first and second lever arm portions 152, 154 (cf. Figs. 5, 6).

Pivot lever 150 which is part of a transmission unit 140, 150, 160 for transmitting torque from second coupling sub-assembly or second drive shaft 72 to conveyor elements 132 and for simultaneously moving conveyor elements 132, is coupled to eccentric pin 144 by the free end of first lever arm portion 152. A pendulum rod 160 which is also part of transmission unit 140, 150, 160, is arranged in the region of the free end of second lever arm portion 154, and is pivotally coupled thereto by its first end 160a. Pendulum rod 160 is further pivotally coupled to frame element 112 by its second end 160b in a region above the free end of second lever arm portion 154 (cf. Figs. 5, 6).

The outmost conveyor element 132 of the plurality of conveyor elements 132 which is positioned close to frame element 112, is pivotally coupled to pivot point 158 of pivot levers 150 arranged in the region of its ends as well as in its central region (cf. Figs. 5, 6).

As particularly can be seen in Fig. 5, push rods 162, 164 are provided, with push rods 162 pivotally connecting pivot points 158 of pivot levers 150 arranged on same frame element 112, and push rods 164 connecting the respective free ends of second lever arm portions 154. Push rods 162, 164 transmit the pivotal and translational movement of pivot lever 150 at second end 102 of conveyor module 100 to eccentric mechanisms at first end 101 and in the central region of conveyor module 100 for synchronizing their movement.

Furthermore, for transmitting torque from second drive shaft 72 arranged at second end 112b of left frame element 112, seen in conveying direction T, that is the front most frame element 112 in Fig. 4, to eccentric discs 142 arranged on right frame element 112, which is upper frame element 112 in Fig. 5, connecting rods 166 are provided, which connect first and second lever arm portions 152, 154 as well as the free ends of second lever arm portion 154 of oppositely arranged pivot levers 150 (cf. Fig. 5).

Push rods 162, 164 and connecting rods 166 are further parts of transmission unit 140, 150, 160 for simultaneously moving conveyor elements 132.

While driving second drive shaft 72 by electric motor 62 and via first drive shaft 70 and quick release axle 82, eccentric disc 142 at second end 112b of left frame element 112 rotates counterclockwise in rotation direction R, shown in Fig. 4. Via push rods 162, 164 and connecting rods 166, the movement of pivot lever 150 coupled to eccentric pin 144 of said eccentric disc 142, is transferred to the other pivot levers 150.

Rotation of eccentric disc 142 causes a rotational movement of the free end of first lever arm portion 152 connected with eccentric pin 144, about rotation axis RA, and a swinging movement of the free end of second lever arm portion 154 about second end 160b of pendulum rod 160. Thereby, pivot point 158 of pivot lever 150 executes a movement in a closed loop on an approximately elliptical moving path in a plane extending vertically and parallel to conveying plane P. Conveyor elements 132, which are coupled to pivot points 158 of pivot levers 150 and to each other by connecting rods 166, execute the same movement. Thereby, conveyor elements 132, at one portion of the elliptical moving path, move in conveying direction T, whereas, at a respective other portion of said elliptical moving path, conveyor elements 132 move in the counter direction to conveying direction T.

The approximately elliptical moving path is arranged such that in one portion of their movement path in which conveyor elements 132 move in conveying direction T, gripping tips or spikes 134 extending upwardly from conveyor elements 132, exceed beyond conveying plane P formed by grid arrangement 120 (cf. Fig. 3). Thereby, spikes 134 move the food products to be treated and positioned on grid arrangement 120, in conveying direction T.

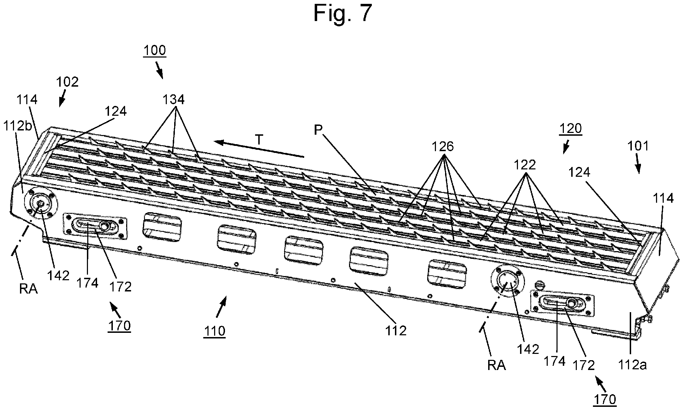

The second embodiment of conveyor module 100 according to Figs. 7 to 9 substantially differs from the first embodiment explained in conjunction with Figs. 4 to 6 by the design of pivot lever 150. In the following explanations, identical elements of the first and second embodiments of conveyor module 100 are provided with identical reference signs.

Conveyor module 100 according to the second embodiment includes a frame unit 110 and a grid arrangement 120, which are identical to frame unit 110 and grid arrangement 120 of the first embodiment of conveyor module 100. Conveyor elements 132 of conveyor unit 130 are arranged below grid arrangement 120 that forms the conveying plane, with conveyor elements 132 positioned such that gripping tips or spikes 134 extend upwardly through space 126 between neighboring grid strut elements of 122 (cf. Fig. 3).

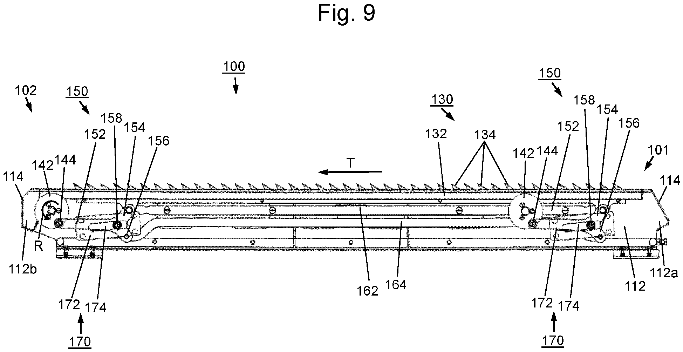

As further can be seen in Figs. 7 and 9, conveyor module 100 comprises eccentric mechanisms 140 arranged in the regions of its first end 101, and its second end 102, including eccentric discs 142 rotatable about horizontal rotation axes RA, and provided with eccentric pins 144. Eccentric disc 142 arranged at second end 112b of left frame element 112 of base frame 110, when seen in conveying direction T, is arranged on second drive shaft 72 of coupling unit 80.

In the second embodiment of conveyor module 100, pivot lever 150 is a three-arm lever with a first lever arm portion 152, a second lever arm portion 154, a third lever arm portion 156 and a pivot point 158 arranged between first, second and third lever arms 152, 154, 156 (cf. Fig. 9).

As can be seen in Figs. 8 and 9, first lever arm portion 152 that extends from pivot point 158 of pivot lever 150 in conveying direction T, is pivotally connected to eccentric pin 144 of eccentric disc 142. The free end of second lever arm portion 154 is pivotally connected to conveyor element 132, and extends slightly upwardly and in a direction contrary to conveying direction T. Third lever arm portion 156 extends slightly downwards and also in a direction contrary to conveying direction T.

As further can be seen in Figs. 8 and 9, push rods 162, 164 are provided, with push rods 162 pivotally connecting the free ends of second lever arm portions 154 of pivot levers 150 arranged at the same frame element 112, and push rods 164 connecting the free ends of third lever arm portions 156 of said pivot levers 150. Push rods 162, 164 transmit the pivotal and translational movement of pivot lever 150 at second end 102 of conveyor module 100 to pivot lever 150 at first end 101 of conveyor module 100 for synchronizing their movement.

Furthermore, connecting rods 166, 168 are provided. Connecting rods 166 connect push rods 162 as well as push rods 164 arranged on one side of conveyor module 100 to corresponding push rods 162, 164 arranged on the respective other side of conveyor module 100, and connecting rods 168 connect conveyor elements 132, in order to enable a synchronized movement of push rods 162, 164 and conveyor elements 132, respectively (cf. Fig. 8).

Pivot axles 159 connect pivot points 158 of oppositely arranged pivot levers 150 to each other. The ends of pivot axles 159 are supported by and guided in a guide device 170. Guide device 170 includes a frame element 172 that is mounted to frame element 112 of frame unit 110. A guide slot 174 is arranged in frame element 172 of device 170. Guide slot 174 extends in conveying direction T and slightly downwardly. Guide device 170 is arranged such that the ends of pivot axle 159 extend into guide slot 174.

While driving second drive shaft 72 via first drive shaft 70 and quick release axle 82, by electric motor 62 of drive unit 60, eccentric disc 142 at second end 112b of left frame element 112 rotates counterclockwise in rotation direction R, shown in Fig. 9. By means of push rods 162, 164 and connecting rods 166, the movement of pivot lever 150 coupled to eccentric pin 144 of said eccentric disc 142, is transferred to other pivot levers 150.

Rotation of eccentric disc 142 causes a rotational movement of the free end of first lever arm portion 152 connected with eccentric pin 144, about rotation axis R, which thereby pivots about pivot point 158, and further causes a translational movement of pivot point 158 of pivot lever 150 in guide slot 174. Since guide slot 174 inclines in conveying direction T, pivot point 158 of pivot lever 150 not only moves in conveying direction T, but also up- and downwards. Second and third lever arm portions 154, 156 execute a pivot movement about pivot point 158, corresponding to the pivot movement of first lever arm portion 152. Additionally thereto, the free ends of second and third lever arm portions 154, 156 execute a translational movement in conveying direction T, overlaid by up- and downward movement according to the inclination of guide slot 174.

During one rotation of eccentric disc 142, the free end of second lever arm portion 154 of pivot lever 150 executes a movement in a closed loop on an approximately elliptical moving path in a plane vertically to conveying plane P. Conveyor elements 132 which are coupled to the free ends of second lever arms 152 of pivot levers 150, execute the same movement. Thereby, conveyor elements 132, at one portion of the elliptical moving path, move in conveying direction T, whereas, at a respective other portion of said elliptical moving path, conveyor elements 132 move in the counter direction to conveying direction T.

The approximately elliptical moving path is arranged such that in one portion of their movement path, at which conveyor elements 132 move in conveying direction T, gripping projections or spikes 134 extending upwardly from conveyor elements 132 exceed the conveying plane formed by grid arrangement 120 (cf. Fig. 3). Thereby, spikes 134 move the food products to be treated and positioned on grid strut elements 122 of grid arrangement 120, in conveying direction T along conveying plane P.

As shown in Figs. 2 to 9, conveyor module 100 has support elements 176 on its underside, with which it rests on bottom 24 of injection channel 20. Preferably, conveyor module 100 has six support elements 176, three of which are provided on each of both frame elements 112 at respective front and rear ends 112a, 112b and in the middle (cf. e.g. Fig. 6). Since bottom 24 of injection channel 20 is not horizontally flat, but in the form of a flattened letter "V", support elements 176 have corresponding inclinations at their lower side (cf. Fig. 3), so that conveying plane P of conveyor module 100 is aligned horizontally after conveyor module 100 is placed on bottom 24 of injection channel 20.

Additionally to support elements 176, there are provided abutment elements 178 for restricting the movement of conveyor module 100 in or opposite to conveying direction T during mounting conveyor module 100 to injector apparatus S, and further during the operation of injector apparatus S, and for securing conveyor module 100 in the operative position. The position of support elements 176 and abutment elements 178 may be varied, in order to adjust the position of conveyor module 100 inside injection channel 20 with respect to processing module I, and particularly to injector head 30, support and abutment elements 176, 178 may be provided with adjustment means, like elongated holes through which fixing means, like screws, extend and along which support and abutment elements 176, 178 may reversibly be shifted in conveying direction T or transversely thereto.

An adjustment of the height of conveyor module 100 could also be possible, e.g. by exchanging support elements 176 by other support elements of respective different height. In this case, also the height of drive unit 60 has to be adapted accordingly. However, an adjustment of the height of conveyor module 100 may also be realized by adjusting the length of the movement path of injector head 30 according to the height of conveyor module 100, whereby an adjustment of the position of drive unit 60 is not necessary.

During an injection process, food products to be treated, like pieces of meat, are placed on first end 101 of conveyor module 100 arranged in injection channel 20 of injector apparatus S. A food product is conveyed in conveying direction T by conveyor module 100 driven by drive unit 60. When the food product is in a desired position below injector head 30 of processing module I, conveyor module 100 stops and injector head 30 is moved downwards for injecting an injectate, like brine, into said food product. After a defined amount of injectate has been injected into the food product, injector head is lifted up, and conveyor module 100 conveys the treated food product to its second end 102.

It has to be understood that, according to the size and number of food products to be treated, conveyor module 100 may stepwise convey the food products in the position below injector head 30, and that after each conveying step, an injection step may be executed, in order to uniformly inject the injectate into the food products.

For removing conveyor module 100 currently installed on injector apparatus S in the operative position, setscrews 94 of securing mechanism 90 are loosened for disengaging groove 96 in quick release axle 82 of coupling unit 80, and quick release axle 82 is pulled out of drive unit 60 by knob K along central axis A, about a predetermined length, corresponding to the axial distance between grooves 96 in quick release axle 82. Quick release axle 82 is thereby moved from the connecting or coupling position into the release or decoupling position. During this movement, first end 82a disengages second drive shaft 72 of coupling unit 80. In the release position, quick release axle 82 may be secured against unintentional insertion or further removal by fastening setscrews 94, which thereby engage the respective other groove 96 in quick release axle 82.

Conveyor module 100, supported on support elements 176, may now be removed from injector apparatus S by pulling conveyor module 100 in conveying direction T, or the counter direction, out of injection channel 20.

Injection channel 20, which is now free from conveyor module 100 and from any other elements, particularly drive elements for driving conveyor module 100, may now easily be cleaned.

For installing the previously removed conveyor module 100, said conveyor module 100 is positioned in injection channel 20 on support elements 176, such that it abuts against abutment elements 178. Conveyor module 100, now in its operative position, may be secured in this position, e.g. by respective screws screwed through a portion of frame unit 110 into support elements 176.

Prior or after positioning conveyor module 100 on support elements 176, the position of support elements 176 and abutment elements 178 in conveying direction T and transversely thereto may be adjusted, such that conveyor module 100 is in a defined position relative to injector head 30 of processing module I.

After positioning conveyor module 100 in the operative position in injection channel 20, setscrews 94 are loosened, and quick release axle 82 is shifted from its release position into its connecting position towards conveyor module 100 about a length corresponding to the distance between grooves 96 in quick release axle 82, whereby first end 82a of quick release axle 82 engages second shaft 72. Thereafter, setscrews 94 may be fastened again, thereby engaging the respective other groove 96.

Furthermore, for ensuring that conveyor module 100, when in the conveying position, is correctly coupled to drive unit 60, a sensor device 180 may be provided in the region of drive unit 60, by means of which the presence and the position of quick release axle 82 may be detected, or the position of an element indicating the presence and the position of quick release axle 82 (cf. Figs. 2, 3). Sensor device 180 may be coupled to a control unit (not shown) of injector apparatus S, and may prevent a start of injector apparatus S when quick release axle is not in the correct position, or may interrupt the operation of injector apparatus S, in case of problems with coupling unit 80. Sensor 180 may additionally detect the rotational speed or number of revolutions of quick release axle 82. Based on this information, the current conveying speed or feed rate of conveyor module 100 may be determined, e.g. by the control unit to which sensor 180 is coupled. This information or the determined conveying speed or feed rate of conveyor module 100 may be used for controlling conveyor module 100, such as adapting the conveying speed or feed rate to a specific product to be treated, or adjusting the current value of conveying speed or feed rate to a desired value. However, the conveying speed or feed rate may not only be maintained constant, but may also be varied, e.g. such that the conveying speed or feed rate is increased between two injection operations, for speeding up the treatment process.

It has to be understood that a conveyor module different from conveyor module 100, like a conveyor module including a band conveyor or a link conveyor, may be used in injector apparatus S. It is only necessary for said different conveyor module, that it includes a second drive shaft like second drive shaft 72 of conveyor module 100, which may be engaged by quick release axle 82, for driving said different conveyor module.

In the embodiments disclosed above, first end 82a of quick release axle 82 has a hexagonal cross-sectional profile, for enabling a form fit engagement of quick release axle 82 with first and second drive shafts 70, 72 of coupling unit 80, which have through holes with corresponding hexagonal cross sectional profiles. Naturally, first end 82a of quick release axle 82 may also have other cross-sectional profiles, like triangular, rectangular or oval cross-sectional profiles, for ensuring a form-fit engagement with first and second drive shafts that have through holes with corresponding cross sectional profiles.

Alternatively to a form-fit engagement of quick release axle 82 with first and second drive shafts 70, 72, a force-fit engagement may be provided, e.g. by a respective clamping mechanism or a screwing mechanism, which secures quick release axle 82 against relative rotation with respect to first and second drive shafts 70, 72 in the connecting position.

Conveyor elements 132 shown and explained in conjunction with the embodiments of conveyor module 100 and Figs. 4 to 9, extend at least approximately over the entire length of frame unit 110. It has to be understood that the conveyor elements may be shorter, e.g. such that two or more conveyor elements may subsequently be arranged in conveying direction, for bridging the entire distance between the ends of frame unit 110. It is only necessary to provide a suitable coupling between said subsequently arranged conveyor elements to ensure a simultaneous conveying movement of said conveyor elements.

Since inventive conveyor module 100 is provided for use in a machine for treating food products, like an injector apparatus, the materials used for the components of conveyor module 100 should be food-suitable and resistant against fluids, like brine. Accordingly, depending on the applied load, suitable plastic or stainless steel may be used for the components of the conveyor module.

Transmission units 140, 150, 160 for transmitting torque from first component 70 of drive unit 60 to conveyor elements 132, and for simultaneously moving conveyor elements 132, have been explained as including eccentric mechanism 140 including eccentric disc 142 with eccentric pin 144. However, other elements, like a crankshaft arranged inside the frame unit of the conveyor module, may be used for transforming the rotational movement of the drive shafts into an at least partially translational movement of the conveyor elements.

### Reference signs

- S: System for treating food products
- I: processing module
- P: conveying plane
- T: conveying direction
- K: knob
- A: central axis
- R: rotation direction
- RA: rotation axis
- 10: framework
- 12: bracket
- 20: injection channel
- 22: side wall
- 24: bottom
- 26: infeed end
- 28: discharge end
- 30: injector head
- 40: injector head support
- 60: drive unit
- 62: electric/drive motor
- 64: gearbox
- 66: flange
- 70: first drive shaft
- 72: second drive shaft
- 80: coupling unit
- 82: quick release axle
- 82a, 82b: first end, second end
- 90: securing mechanism
- 92: support element
- 94: setscrew
- 96: groove
- 100: conveyor module
- 101, 102: first end, second end
- 110: frame unit
- 112, 114: frame elements
- 112a, 112b: first end, second end
- 120: grid arrangement
- 122: grid strut element
- 124: crosspiece
- 126: space
- 130: conveyor unit
- 132: conveyor element
- 134: gripping tip
- 140: eccentric mechanism
- 142: eccentric disc
- 144: eccentric pin
- 150: pivot lever
- 152: first lever arm portion
- 154: second lever arm portion
- 156: third lever arm portion
- 158: pivot point
- 160: pendulum rod
- 160a, 160b: first end, second end
- 162, 164: push rods
- 166, 168: connecting rods
- 170: guide device
- 172: frame element
- 174: slot
- 176: support element
- 178: abutment element
- 180: sensor device

## Claims

1. A system (S) for treating food products, comprising:
a framework (10),
at least one processing module (I) supported by the framework (10),
at least one conveyor module (100) which has at least one drivable conveyor element (132) for feeding a food product to be treated to the processing module (I) and discharging the treated food product from the processing module (I) and which is removably mounted on the framework (10),
at least one drive unit (60) supported on the framework (10) with a drive motor (62) for driving the at least one conveyor element (132) of the conveyor module (100), and
a coupling unit (80) with at least a first and a second coupling sub-assembly (70, 72),
wherein the first coupling sub-assembly (70) supported on the framework (10) is rotationally coupled to the drive motor (62),
wherein the second coupling sub-assembly (72) supported on the conveyor module (100) is rotationally coupled to the at least one conveyor element (132) of the conveyor module (100), and
wherein the coupling unit (80) is a quick release coupling unit.

2. The system (S) according to claim 1,
wherein the framework (10) has a structure (24) for the supported, detachable, preferably tool-less detachable attachment of the conveyor module (100) to the framework (10).

3. The system (S) according to claim 1 or 2,
wherein the framework (10) has at least one adjustment and/or attachment sub-assembly (178) for adjusting the position of the conveyor module (100) relative to the processing module (I) and/or for releasably attaching the conveyor module (100) to the framework (10).

4. The system (S) according to one of claims 1 to 3,
wherein the coupling unit (80) includes a connecting device (82) for releasably coupling the first coupling sub-assembly (70) to the second coupling sub-assembly (72) in a coupled state.

5. The system (S) according to claim 4,
wherein the connecting device (82) is tensioned in the coupled state.

6. The system (S) according to claim 4 or 5,
wherein the coupling unit (80) includes a securing mechanism (90) for securing the connecting device (82) at least in a release state.

7. The system (S) according to one of claims 1 to 6,
wherein the first coupling sub-assembly (70) includes a first drive shaft (70) adapted to be coupled to a second drive shaft (72) of the second coupling sub-assembly (72), wherein the drive shafts (70, 72) are preferably hollow shafts and wherein the connecting device (82) is preferably a quick release axle reversibly insertable into said hollow shafts (70, 72) for releasably connecting the first coupling sub-assembly (70) to the second coupling sub-assembly (72).

8. The system (S) according to one of claims 1 to 7,
wherein a transmission unit (140, 150, 160) for transmitting torque from the second coupling sub-assembly (72) to the at least one conveyor element (132) to move the at least one conveyor element (132) on a moving path in the form of a closed loop.

9. The system (S) according to claim 8 when dependent on claim 7,
wherein the transmission unit (140, 150, 160) includes a first eccentric mechanism (140) comprising at least an eccentric disc (142) having an eccentric pin (144), and being arranged on said second drive shaft (72).

10. The system (S) according to one of claims 1 to 9,
wherein the conveyor module (100) comprises several, preferably five conveyor elements (132) which can be driven synchronously by the drive unit (60) via the coupling unit (80).

11. The system (S) according to one of claims 1 to 10,
wherein the conveyor module (100) has a cross-section at least approximately in the form of an upside down letter "U" and wherein the at least one conveyor element (132) is arranged at least partially inside the cavity defined by the letter "U".

12. The system (S) according to one of claims 1 to 11,
wherein the conveyor module (100) defines a conveying plane (P) along which the products to be processed and the processed products are conveyed.

13. The system (S) according to one of claims 8 to 12,
wherein the conveying plane (P) is defined by a grid arrangement (120) preferably formed by intersecting grid strut elements (122), and the conveyor element (132) being arranged below the conveying plane (P) can extend through a space (126) formed between the grid strut elements (122) during its movement along the closed loop of the moving path.

14. The system (S) according to one of claims 1 to 13,
wherein the conveyor element (132) is provided with at least one gripping tip (134).

15. A conveyor module (100) preferably according to one of claims 1 to 14 for use in a food processing machine, in particular an injector apparatus for injecting injectate into a food product, including a processing module (I),
wherein the conveyor module (100) comprises at least one drivable conveyor element (132) for feeding a food product to be processed to the processing module (I) and discharging the processed food product from the processing module (I) and a coupling sub-assembly (72) for releasable coupling the conveyor element (132) with a drive unit (60) of the processing machine.
